# EUROPÄISCHE PATENTANMELDUNG

(11) **EP 1 780 429 A2**
(43) Veröffentlichungstag der Anmeldung: **02.05.2007**
(21) Anmeldenummer: 06017452.1
(22) Anmeldetag: 22.08.2006
(51) Int. Cl.: F16D 1/08, F16L 13/16

(54) **Spindelmutter**

(30) Priorität: 26.08.2005 DE 202005013514 U
(71) Anmelder: Marantec Antriebs- und Steuerungstechnik GmbH & Co. KG., 33428 Marienfeld (DE)
(72) Erfinder: Hörmann, Michael, 33790 Halle/Westf. (DE)
(74) Vertreter: Laufhütte, Dieter

(57) **Zusammenfassung**

Die Erfindung betrifft eine Spindelmutter, die als Teil einer Antriebseinrichtung mit einem Rohr verbunden ist, wobei die Spindelmutter einen im wesentlichen zylindrischen Absatz aufweist, in dem zumindest zwei Ausnehmungen ausgenommen sind, wobei über den zylindrischen Absatz der Spindelmutter ein Rohr geschoben ist und wobei das Rohr in dem Bereich der Ausnehmungen zur Ausnehmung hin derart verformt ist, daß sich die verformten Bereiche an die Wandungen der Ausnehmung anlegen.

## Beschreibung

Die Erfindung betrifft eine Spindelmutter, die als Teil einer Antriebseinrichtung mit einem Rohr verbunden ist.

Spindelantriebe sind in unterschiedlichen Gebieten der Antriebstechnik gebräuchlich. Bei der Herstellung derartiger Spindelantriebe muss die Spindelmutter als innen liegendes Teil mit einem Rohr verbunden werden. Hierzu sind unterschiedliche Verbindungstechniken bislang verwendet worden. So ist die Spindelmutter beispielsweise über ein entsprechendes Innengewinde, welches im Rohr vorgesehen wurde, eingeschraubt worden. Alternativ sind die das innen liegende Teil bildende Spindelmutter und das Rohr durch einen Stift miteinander verbunden worden. Eine andere Verbindungstechnik besteht darin, dass im Rohr Sicken angebracht werden.

Bei diesem Verbinden durch Anbringen von Sicken oder durch das sogenannte Verstiften, das heißt der Steckverbindung zwischen Rohr und Innenteil, können keine sehr hohen Kräfte übertragen werden. Die Verschraubung des Rohrs ist dagegen sehr kostenaufwendig, da sowohl die Spindelmutter wie auch das Rohr jeweils mit einem Gewinde versehen werden müssen.

Aufgabe der vorliegenden Erfindung ist es daher, eine Spindelmutter zu schaffen, die als Teil einer Antriebseinrichtung in einfacher und kostengünstiger Weise mit einem Rohr verbunden werden kann.

Erfindungsgemäß wird die Aufgabe durch die Kombination der Merkmale des Anspruchs 1 gelöst. Demnach weist die Spindellmutter eine im wesentlichen zylindrischen Absatz auf, in dem zumindest zwei Ausnehmungen ausgenommen sind. Über den zylindrischen Absatz der Spindelmutter ist ein Rohr geschoben. In dem Bereich des Rohres, der oberhalb der Ausnehmungen liegt, ist das Rohr nun derart zur Ausnehmung hin verformt, dass die verformten Bereiche des Rohres an die Wand der Ausnehmung anliegen. Hierdurch wird eine formschlüssige Verbindung zwischen der Spindelmutter als innen liegendes Teil und dem entsprechenden Rohr geschaffen. Hierdurch kann das als Einzelteil vorliegende Rohr mit der als Einzelteil vorliegenden Spindelmutter ohne weitere Zusatzteile kostengünstig in einem Arbeitsgang miteinander verbunden werden.

Bevorzugte Ausgestaltungen der Erfindung ergeben sich aus dem sich an den Hauptanspruch anschließenden Unteransprüchen. Demnach können sich besonders vorteilhaft erste verformte Bereiche des Rohres an den sich gegenüberliegenden Wänden einer Ausnehmung im zylindrischen Absatz der Spindelmutter abstützen, die parallel zur Längsachse des Rohres verlaufen. Gleichzeitig können sich zweite verformte Bereiche des Rohres an den sich gegenüberliegenden Wänden einer Ausnehmung abstützen, die quer zur Längsachse des Rohres verlaufen. Hierdurch kann die Kraft einer sich in der Spindelmutter drehenden Spindel in Radialrichtung und Axialrichtung übertragen werden.

In einfacher Art und Weise ist die Verformung des Rohres zur Verbindung mit der Spindelmutter durch Verstemmung gebildet.

Vorteilhaft ist die erfindungsgemäße Spindelmutter als Teil eines Drehrohrantriebes vorgesehen. Alternativ kann sie auch als Teil eines Rolladenantriebes vorgesehen werden. Eine Verwendung in derartigen Antrieben ist daher möglich, da hier eine sichere Kraftübertragung in Radial- bzw. Axialrichtung ermöglicht wird.

Weitere Merkmale, Einzelheiten und Vorteile der Erfindung ergeben sich aus der in der Zeichnung dargestellten Ausführungsvariante der Erfindung. Es zeigen:
- Figur 1:: eine explosionsartig auseinandergezogene perspektivische Darstellung der Spindelmutter mit Rohr,
- Figur 2:: drei unterschiedliche Seitenansichten des Rohrs gemäß Figur 1 und
- Figur 3:: drei Ansichten und einen Schnitt durch die Spindelmutter gemäß Figur 1.

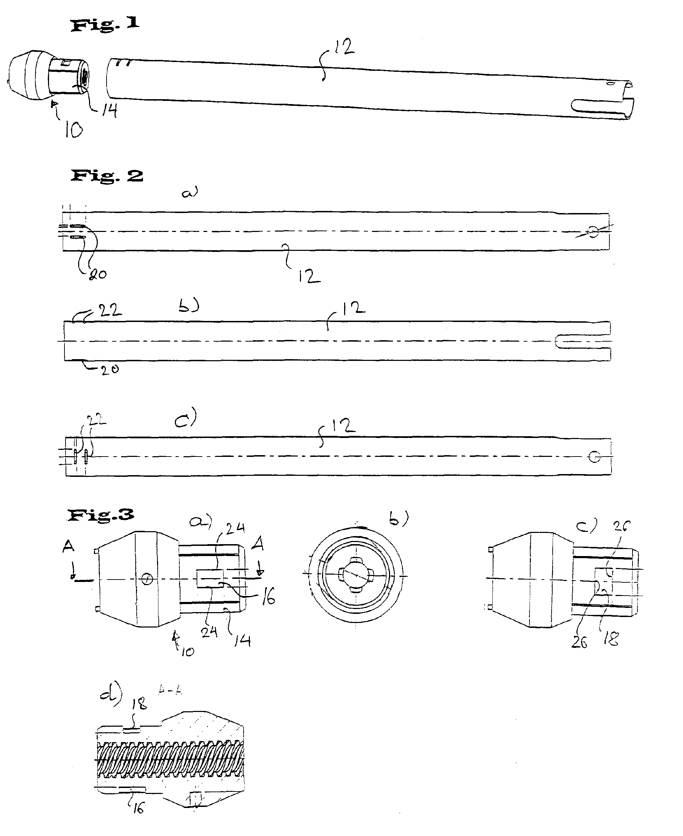

In Figur 1 ist eine Spindelmutter 10 und ein Rohr 12 dargestellt, wobei Spindelmutter 10 und Rohr 12 hier explosionsartig auseinander gezogen sind. Im zusammengebauten Zustand ist das Rohr 12 auf einen zylindrischen Absatz 14 der Spindelmutter 10 aufgezogen. Die hier dargestellte Spindelmutter 10 und das Rohr 12 bilden im Ausführungsbeispiel einen Teil eines Drehrohrantriebs, in welcher das Rohr 12 eine Kolbenstange darstellt.

Der genauere Aufbau ergibt sich aus den Figuren 2 und 3. Die Spindelmutter 10 mit ihrem zylindrischen Absatz 14 weist im Bereich des zylindrischen Absatzes 14 zwei rechteckige Ausnehmungen 16 und 18 auf, die, wie anhand der Figur 3 d ersichtlich, sich gegenüberliegend angeordnet sind. Das Rohr 12 bzw. die Kolbenstange 12 wird, nachdem sie auf den zylindrischen Absatz 14 aufgeschoben ist, im Bereich des Teils, der oberhalb der Ausnehmungen 16 bzw. 18 liegt, verstemmt, so dass der jeweils gegenüberliegende Bereich des Rohres sich gegen die Wände der Ausnehmung 16 bzw. 18 abstützt. Wie anhand der Figur 2 dargestellt, sind bereits Schlitze 20 bzw. 22 in dem Bereich des Rohres 12 vorgesehen, der verformt, das heißt verstemmt, werden soll. Bei den der Ausnehmung 16 gegenüberliegenden Schlitzen 20 wird sich nach entsprechendem Verstemmen der verformte Teil des Rohres gegen die parallel zur Längsachse des Rohres verlaufenden Wandungen 24 abstützen. Demgegenüber wird sich der Bereich des Rohres zwischen den Schlitzen 22, die der Ausnehmung 18 gegenüberliegen, an den Wandungen 26 der Ausnehmung 18 abstützen, die quer zur Längsachse des Rohres verlaufen. Hierdurch wird also eine radiale und axiale Sicherung des Rohres 12 bzw. der Kolbenstange 12 mit der Spindelmutter 10 erreicht. Diese Sicherung überträgt die Kraft der sich in der Spindelmutter 10 drehenden - hier nicht näher dargestellten - Spindel in Radial- bzw. Axialrichtung.

## Patentansprüche

1. Spindelmutter, die als Teil einer Antriebseinrichtung mit einem Rohr verbunden ist,
**dadurch gekennzeichnet,**
**daß** die Spindelmutter einen im wesentlichen zylindrischen Absatz aufweist, in dem zumindest zwei Ausnehmungen ausgenommen sind, daß über den zylindrischen Absatz der Spindelmutter ein Rohr geschoben ist und daß das Rohr in dem Bereich der Ausnehmungen zur Ausnehmung hin derart verformt ist, daß sich die verformten Bereiche an die Wandungen der Ausnehmung anlegen.

2. Spindelmutter nach Anspruch 1, **dadurch gekennzeichnet, daß** sich erste verformten Bereiche des Rohres an den sich gegenüberliegenden Wänden einer Ausnehmung abstützen, die parallel zur Längsachse des Rohres verlaufen, und daß zweite verformte Bereiche des Rohres an den sich gegenüberliegenden Wänden einer Ausnehmung abstützen, die quer zur Längsachse des Rohres verlaufen.

3. Spindelmutter nach Anspruch 1 oder 2, **dadurch gekennzeichnet, daß** die Verformung des Rohres durch Verstemmen gebildet ist.

4. Spindelmutter nach einem der vorangehenden Ansprüche, **dadurch gekennzeichnet, daß** sie Teil eines Drehrohrantriebes ist.

5. Spindelmutter nach einem der vorangehenden Ansprüche, **dadurch gekennzeichnet, daß** sie Teil Rolladenantriebes ist.
